(19) Europäisches Patentamt
European Patent Office
Office européen des brevets

(11) **EP 1 385 149 B1**

(12) **FASCICULE DE BREVET EUROPEEN**

(45) Date de publication et mention
de la délivrance du brevet:
**05.10.2005   Bulletin 2005/40**

(51) Int Cl.$^7$: **G10L 17/00**

(21) Numéro de dépôt: **03291716.3**

(22) Date de dépôt: **10.07.2003**

(54) **Normalisation de score de vérification dans un dispositif de reconnaissance vocale de locuteur**

Normalisierung eines Verifizierungsmasses in einer Vorrichtung zur Sprecherverifikation

Normalisation of verification score in a device for speaker verification

(84) Etats contractants désignés:
**DE ES GB IT**

(30) Priorité: **22.07.2002   FR 0209299**

(43) Date de publication de la demande:
**28.01.2004   Bulletin 2004/05**

(73) Titulaire: **FRANCE TELECOM**
**75015 Paris (FR)**

(72) Inventeur: **Charlet, Delphine**
**22300 Lannion (FR)**

(74) Mandataire: **Cabinet Martinet & Lapoux**
**43, boulevard Vauban,**
**B.P. 405 Guyancourt**
**78055 St. Quentin Yvelines Cédex (FR)**

(56) Documents cités:
- **MARITHOZ J ET AL: "A MAP approach, with synchronous decoding and unit-based normalization for text-dependent speaker verification" IDIAP RESEARCH REPORT (PUBLISHED IN ICSLP 2000), [en ligne] octobre 2000 (2000-10), XP002232327 Martigny, Switzerland Extrait de l'Internet: <URL:http://citeseer.nj.nec.com/marithoz00 map.html> [extrait le 2003-02-21]**
- **MATSUI T ET AL: "Robust methods of updating model and a priori threshold in speaker verification" 1996 IEEE INTERNATIONAL CONFERENCE ON ACOUSTICS, SPEECH, AND SIGNAL PROCESSING CONFERENCE PROCEEDINGS (CAT. NO.96CH35903), 1996 IEEE INTERNATIONAL CONFERENCE ON ACOUSTICS, SPEECH, AND SIGNAL PROCESSING CONFERENCE PROCEEDINGS, ATLANTA, GA, USA, 7-10 M, vol. 1, pages 97-100, XP002232328 1996, New York, NY, USA, IEEE, USA ISBN: 0-7803-3192-3**
- **HEBERT M ET AL: "IMPROVED NORMALIZATION WITHOUT RECOURSE TO AN IMPOSTOR DATABASE FOR SPEAKER VERIFICATION" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY: IEEE, US, vol. 2 OF 6, 5 juin 2000 (2000-06-05), pages 1213-1216, XP001072110 ISBN: 0-7803-6294-2**

## Description

La présente invention concerne la reconnaissance vocale automatique de locuteur, et plus particulièrement la vérification d'un locuteur autorisé pour accéder à une application de service, indépendamment, ou bien en dépendance du contenu du segment vocal, tel que mot de passe, que prononce le locuteur.

La vérification du locuteur, ou encore authentification vocale, constitue un mode ergonomique pour la sécurisation d'accès. Malheureusement, ses performances actuelles n'assurent pas une sécurité totale.

Un développeur de moyen de vérification de locuteur dans un dispositif de reconnaissance automatique de parole, objet de l'invention, doit faire un compromis entre un taux de fraude autorisée correspondant à des imposteurs accédant à l'application et le niveau d'ergonomie requis correspondant à un taux d'acceptation de locuteurs de bonne foi auxquels l'application de service ne peut être refusée.

Le compromis entre sécurité et ergonomie conditionne la valeur d'un seuil de décision. En effet, tout procédé de vérification de locuteur aboutit à un score de vérification qui traduit la similarité entre un modèle vocal de locuteur autorisé présumé et un segment vocal de locuteur inconnu souhaitant accéder à l'application. Le score de vérification est ensuite comparé au seuil de décision. Selon le résultat de cette comparaison, le dispositif décide d'accepter ou de rejeter le locuteur inconnu, c'est-à-dire de l'autoriser ou l'interdire à accéder à l'application. Si le seuil de décision est sévère et donc élevé, on acceptera à tort peu d'imposteurs mais on rejettera des locuteurs autorisés. Si le seuil de décision est lâche et donc faible, on rejettera peu de locuteurs autorisés mais on acceptera beaucoup d'imposteurs.

La difficulté réside donc dans la détermination du seuil de décision, d'autant que pour un même taux d'acceptation, le seuil est variable d'un locuteur à l'autre ("A COMPARISON OF A PRIORI THRESHOLD SETTING PROCEDURES FOR SPEAKER VERIFICATION IN THE CAVE PROJECT", J.-B. PIERROT et al., Proceedings ICASSP, 1998).

Ainsi la distribution des scores de vérification dépend du modèle vocal de locuteur sur lesquels ils sont calculés. Un fonctionnement optimal de la vérification de locuteur nécessite donc un seuil de décision respectif par modèle.

Une façon de s'affranchir de la sensibilité au seuil par locuteur réside dans la normalisation de la distribution des scores de vérification. Si par une transformation appropriée, les distributions des scores sont rendues indépendantes du modèle de locuteur, on résout alors le problème de la recherche d'un seuil par locuteur, c'est-à-dire par modèle de locuteur. Le problème est donc déplacé vers la recherche d'une normalisation des scores.

Dans la méthode dite "z-norm" selon l'article intitulé "A MAP APPROACH, WITH SYNCHRONOUS DECODING AND UNIT-BASED NORMALIZATION FOR TEXT-DEPENDENT SPEAKER VERIFICATION", Johnny MARIETHOZ et al., Proceedings ICASSP, 2000, la distribution des scores de vérification est normalisée par des paramètres $\mu_X$ et $\sigma_X$ de la distribution des scores d'imposteurs estimés sur une population d'imposteurs. Si $s_X(Y)$ est le score de vérification pour un segment vocal à tester Y par rapport à un modèle de locuteur autorisé X, le score de vérification normalisé par la méthode z-norm est :

$$\bar{s}_X(Y) = \frac{s_X(Y) - \mu_X}{\sigma_X}$$

où $\mu_X$ et $\sigma_X$ sont respectivement la moyenne et l'écart-type de la distribution des scores d'imposteurs sur le modèle X. Ces paramètres de normalisation sont estimés préalablement, lors de la phase d'apprentissage du dispositif, avec une base de données d'enregistrements qui sont considérés comme des occurrences plausibles d'imposture pour le modèle de locuteur X.

La nécessaire base de données d'enregistrements de locuteurs considérés comme imposteurs par rapport au locuteur autorisé est concevable dans le cas de la vérification de locuteur en fonction d'un mot de passe fixé et connu du dispositif de reconnaissance vocale. Cela suppose que le développeur de l'application de service aura fait auparavant une collecte d'enregistrements de personnes prononçant le mot de passe dans un contexte proche de l'application pour que ces enregistrements représentent des occurrences plausibles de tests d'imposture. Cette nécessaire collecte d'enregistrements rend difficile le changement de mot de passe dans le cas d'un système à mot de passe fixé par le dispositif et rend impossible le choix du mot de passe par le locuteur autorisé, utilisateur de l'application.

En effet, dans le cas ergonomique où le mot de passe est choisi par l'utilisateur lui-même lors de sa phase d'apprentissage, il est pratiquement impossible d'effectuer une collecte d'enregistrements de ce mot de passe par un ensemble d'autres locuteurs.

D'autre part, pour améliorer l'ergonomie de certaines applications est prévue une phase d'apprentissage, dite enrôlement, très courte au cours de laquelle une empreinte vocale du locuteur utilisateur autorisé est créée en générant un modèle vocal de celui-ci.

Pour enrichir la modélisation, le modèle vocal de locuteur autorisé est adapté au fur et à mesure des utilisations avec des enregistrements de parole validés par l'application ou par un algorithme de décision, comme divulgué par l'article "ROBUST METHODS OF UPDATING MODEL AND A PRIORI THRESHOLD IN SPEAKER VERIFICATION", Tomoko MATSUI et al., Proceedings ICASSP, 1996, p. 97-100. Lorsqu'un utilisateur a été bien reconnu, sa parole enregistrée pendant la demande d'accès est utilisée pour mettre à jour son modèle. Cette mise à jour enrichit la modélisation et prend en compte les évolutions de la voix du locuteur autorisé au cours du temps.

Puisque la modélisation s'enrichit, la distribution des scores est modifiée et le seuil de décision défini initialement peut être inadapté à l'application. En effet, plus le modèle est déterminé avec beaucoup de données, meilleurs sont les scores de vérification dans le cas d'un locuteur-utilisateur autorisé. Si le seuil de décision est positionné assez lâche pour ne pas rejeter trop d'utilisateurs autorisés dans la configuration initiale, il est également assez permissif et laisse passer un grand nombre d'imposteurs. Comme le modèle vocal de locuteur est enrichi au fur et à mesure des demandes d'accès, les distributions des scores sont modifiées, ce qui peut conduire à un très faible rejet des locuteurs autorisés et à un taux d'acceptation des imposteurs relativement élevé, alors qu'une modification du seuil de décision bénéficierait pleinement de l'enrichissement de la modélisation et conserverait un faible rejet à tort tout en ayant un faible taux d'acceptation d'imposteurs.

Dans l'article précité, MATSUI et al. proposent d'adapter le seuil de décision lorsque le modèle de locuteur est adapté. Cette adaptation est donc faite directement sur le seuil de décision pour un point de fonctionnement attendu.

L'adaptation du seuil proposé par MATSUI et al. suppose que le dispositif a conservé tous les enregistrements de parole nécessaires à l'apprentissage et l'adaptation du modèle de locuteur pour pouvoir déterminer un ensemble de scores de vérification qui vont servir à l'estimation d'un seuil de décision pour cet ensemble. Ce seuil est interpolé avec l'ancien seuil pour obtenir le nouveau seuil.

Les inconvénients de cette adaptation de seuil sont les suivants. D'une part, des occurrences d'enregistrements d'imposteurs sont nécessaires, ce qui est irréaliste dans certaines applications. D'autre part, les enregistrements de parole de locuteur doivent être conservés pour ré-estimer le seuil de décision ce qui implique un coût en mémoire non négligeable. Enfin, la ré-estimation étant faite au niveau du seuil de décision, c'est-à-dire pour un point de fonctionnement recherché, si l'on souhaite modifier le point de fonctionnement pour des considérations ergonomiques par exemple, alors tous les paramètres de l'interpolation sont à modifier.

L'objectif principal de l'invention est de normaliser le score de vérification pour qu'il soit comparé à un seuil de décision toujours pertinent, indépendant du locuteur, tout en assurant que le score de vérification évolue avec la voix du locuteur autorisé, sans recourir à des enregistrements supplémentaires d'imposteurs. En conséquence, relativement au dispositif de reconnaissance de parole, l'invention vise à réduire l'espace de mémoire nécessaire à des enregistrements supplémentaires d'imposteurs, tout en garantissant une décision plus précise et rapide.

Pour atteindre cet objectif, un dispositif pour reconnaître automatiquement la voix d'un locuteur autorisé à accéder à une application, comprend un moyen pour générer des paramètres d'un modèle vocal d'acceptation relatif à un segment vocal prononcé par le locuteur autorisé et des paramètres d'un modèle vocal de refus préalablement pendant une phase d'apprentissage, un moyen pour normaliser par des paramètres de normalisation un score de vérification de locuteur dépendant du rapport de vraisemblances entre un segment vocal à tester et les modèles d'acceptation et de refus, et un moyen pour comparer le score de vérification normalisé à un premier seuil afin de n'autoriser l'accès du locuteur ayant prononcé le segment vocal à tester à l'application que si le score normalisé est au moins aussi grand que le premier seuil. Ce dispositif est caractérisé, selon l'invention, en ce qu'il comprend un moyen pour mettre à jour au moins l'un des paramètres de normalisation en fonction d'une valeur précédente dudit paramètre et du score de vérification de locuteur à chaque test de segment vocal seulement lorsque le score normalisé est au moins égal à un deuxième seuil qui est au moins égal au premier seuil.

L'expression "au moins égal à" signifie une variable supérieure ou égale à un seuil.

Si l'on souhaite modifier le point de fonctionnement, le premier seuil est modifié sans nécessiter l'ajustement des paramètres.

Le score normalisé est ainsi mis à jour en ligne, au fur et à mesure des tentatives de vérification de locuteur et donc des demandes d'accès à l'application, si bien que le score normalisé évolue avec les changements de la voix du locuteur. La mise à jour en fonction au moins d'un paramètre et non d'un seuil permet de modifier le score de décision normalisé indépendamment du point de fonctionnement requis par l'application.

Le paramètre de normalisation mis à jour peut être représentatif de la valeur moyenne statistique du score de vérification de locuteur ou de l'écart-type du score de vérification de locuteur, ou bien ces deux paramètres sont mis à jour.

La mise à jour du score normalisé est encore améliorée lorsque le dispositif comprend un moyen pour mettre à jour au moins l'un des paramètres du modèle d'acceptation en fonction d'une valeur précédente dudit paramètre de modèle seulement lorsque le score normalisé est au moins égal au deuxième seuil.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique d'un système de télécommunications avec un serveur contenant un dispositif de reconnaissance vocale de locuteur ;
- la figure 2 est un bloc-diagramme fonctionnel d'un moyen d'apprentissage inclus dans le dispositif ; et
- la figure 3 est un bloc-diagramme fonctionnel d'un moyen de vérification de locuteur inclus dans le dispositif.

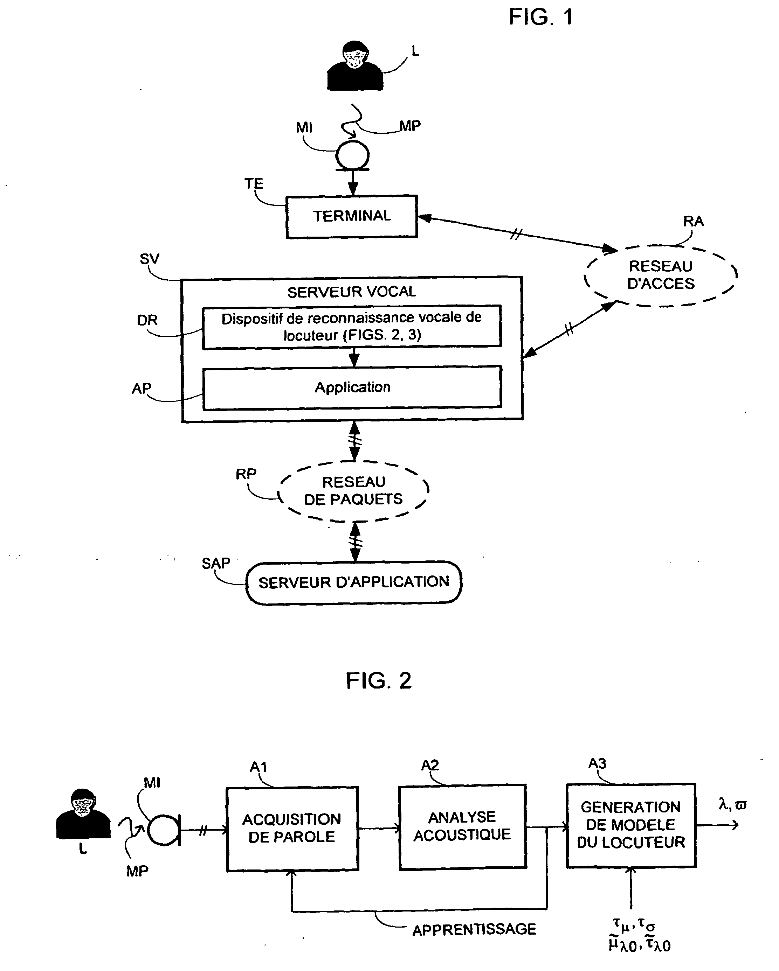

En se référant à la figure 1, on a représenté schématiquement un contexte préféré d'utilisation du dispositif de reconnaissance vocale automatique de locuteur DR selon l'invention. Ce contexte a trait un système de télécommunications client-serveur dans lequel un terminal de locuteur TE tel qu'un poste téléphonique ou un ordinateur personnel muni d'un modem, ou un terminal mobile, tel qu'un radiotéléphone mobile est relié à un serveur vocal téléphonique interactif SV contenant le dispositif DR, à travers un réseau d'accès téléphonique ou radiotéléphonique cellulaire RA. Lorsqu'un locuteur autorisé souhaite accéder à une application de service prédéterminée AP, un mot de passe MP ou une phrase prononcé par un locuteur autorisé L devant le microphone MI du terminal TE est transmis au serveur SV en réponse à une invitation de transmettre le mot de passe au cours d'un dialogue avec le serveur vocal SV. Le dispositif DR analyse le mot de passe MP et donne accès à l'application prédéterminée AP lorsque la voix de locuteur L a été correctement reconnue. Par exemple, l'application AP offre des services gérés dans un serveur d'application SAP relié au serveur vocal SV à travers un réseau de paquets RP, tel que le réseau internet.

Selon d'autres variantes d'application, le dispositif DR est implémenté dans un terminal, tel qu'un poste téléphonique, un ordinateur personnel, un radiotéléphone mobile, ou un assistant numérique personnel.

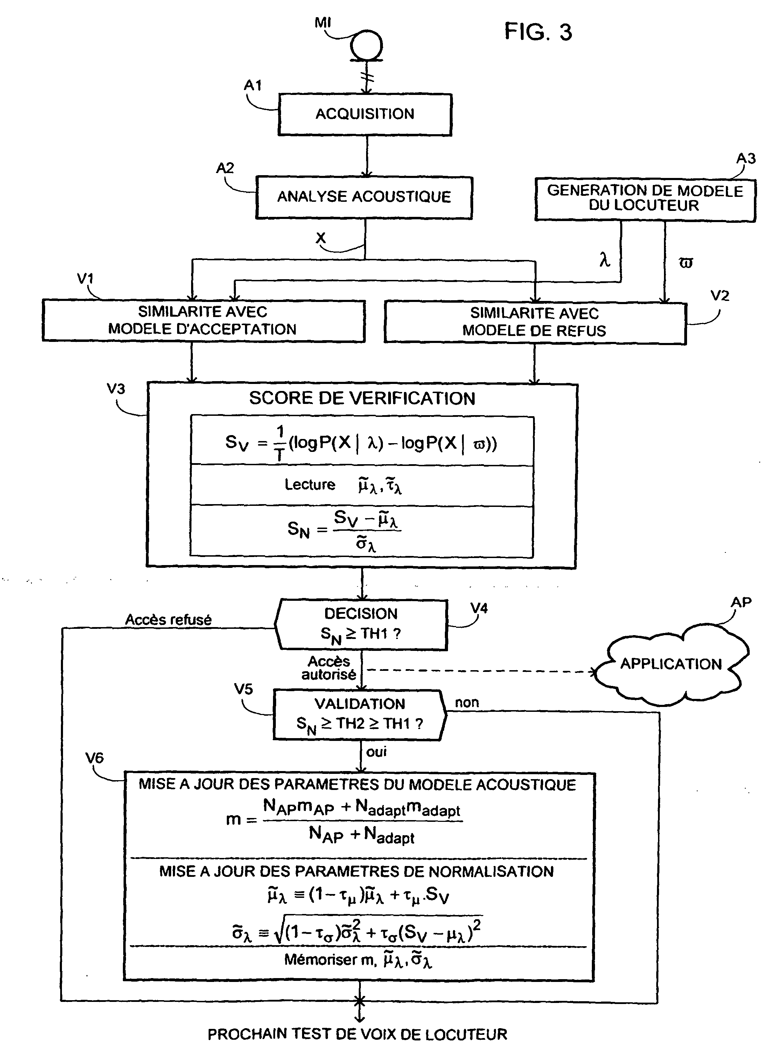

Comme montré aux figures 2 et 3, le dispositif de reconnaissance vocale automatique de locuteur DR selon l'invention comprend fonctionnellement un moyen d'apprentissage composé de trois modules logiciels A1, A2 et A3, et un moyen de vérification automatique de locuteur composé de six modules logiciels V1 à V6. Ils coopèrent avec une portion de mémoire non volatile dans le serveur pour mémoriser divers paramètres dont la plupart sont mis à jour, servant à des déterminations de score de vérification normalisé défini plus loin.

Le moyen d'apprentissage détermine des paramètres caractérisant principalement un modèle vocal du locuteur autorisé L à reconnaître. Il comprend un module d'acquisition de parole A1 connecté à une source acoustique, tel que le microphone MI, un module d'analyse acoustique A2 dont la sortie est bouclée sur une entrée itérative de modèles vocaux pendant une phase d'apprentissage, et un module de génération de modèle de locuteur A3.

La phase d'apprentissage automatique, dite également enrôlement, est fondée par exemple sur la modélisation statistique d'un mot de passe MP par des chaînes de Markov cachées HMM (Hidden Markov Model). On pourra se reporter au sujet des méthodes statistiques de modélisation markovienne cachée à l'article de Lawrence R. RABINER, "A Tutorial on Hidden Markov Models and Selected Applications in speech Récognition", Proceedings of the IEEE, vol. 77, No. 2, February 1989, p. 257-286. Le mot de passe MP est prononcé devant le microphone MI pendant N occurrences de parole de durée prédéterminée chacune, typiquement N = 3 fois, par le locuteur L autorisé à accéder à l'application AP dans le serveur vocal SV. N versions du mot de passe sont alors mémorisées dans le module d'acquisition A1, après conversion analogique-numérique. Le mot de passe MP est choisi librement par le locuteur L et est inconnu a priori du dispositif de reconnaissance vocale de locuteur DR. Aucun autre enregistrement du mot de passe prononcé par des locuteurs autres que le locuteur autorisé L n'est nécessaire pendant la phase d'apprentissage.

En variante, la composition des mots de passe est libre, c'est-à-dire est constituée par tout segment vocal, et peut être changée au gré du locuteur autorisé à chaque tentative de reconnaissance de sa voix.

Au fur et à mesure des versions analysées du mot de passe prononcé, le module d'analyse A2 estime, d'une manière itérative connue, des paramètres prédéterminés m d'un modèle de Markov caché $\lambda$, afin d'en déduire les moyennes de distribution gaussienne de ces paramètres de modèle. Le module A2 hérite d'autres paramètres d'un modèle vocal général qui ont été prémémorisés dans le module A2, à cause du faible nombre de données disponibles résultant de l'analyse des versions du mot de passe en petit nombre N. Les paramètres du modèle vocal d'acceptation $\lambda$ ainsi générés du locuteur autorisé L sont mémorisés dans le module A3.

Le modèle vocal $\lambda$, dit également référence acoustique, est caractéristique de la voix du locuteur autorisé L et peut être associé en mémoire du serveur SV à un identificateur du locuteur, tel qu'un code secret et composé au clavier du terminal TE avant de prononcer le mot de passe MP.

Parallèlement à la construction du modèle d'acceptation $\lambda$, le module d'analyse acoustique A2 construit un modèle vocal de refus $\bar{\omega}$, dit également modèle alternatif (background model) ou anti-model. Les paramètres du modèle de refus $\bar{\omega}$ sont connus et pré-mémorisés dans le serveur SV pendant la phase d'apprentissage. Ils sont représentatifs d'un modèle vocal "moyen" d'un nombre élevé de locuteurs quelconques, et par conséquent d'un modèle vocal d'imposture.

A la fin de la phase d'apprentissage, le module de génération A3 détermine des valeurs initiales de paramètres $\tilde{\mu}_{\lambda 0}$ et $\tilde{\tau}_{\lambda 0}$ nécessaires à la normalisation de score de vérification selon l'invention, estimées sur un corpus de données d'apprentissage définies préalablement notamment en fonction de l'application AP à laquelle le locuteur accède par le mot de passe reconnu. Ces données d'apprentissage ont été écrites préalablement dans la mémoire du serveur SV et permettent au module A3 de déterminer des valeurs initiales $\tilde{\mu}_{\lambda\,0}$ et $\tilde{\tau}_{\lambda\,0}$ de paramètres de normalisation dépendant notamment de paramètres des modèles vocaux $\lambda$ et $\bar{\omega}$ et utilisées dans des formules récurrentes de ces paramètres lors d'un premier test, et des facteurs d'adaptation $\tau_\mu$ et $\tau_\sigma$ respectivement pour les paramètres de normalisation $\tilde{\mu}_\lambda$ et $\tilde{\sigma}_\lambda$.

En variante, au lieu de générer des modèles paramétriques du type HMM, les modèles d'acceptation et de refus $\bar{\omega}$ sont générés selon une modélisation GMM (Gaussian Mixture Model) fondée sur le mélange de distributions normales, dites distributions gaussiennes, relatives à des paramètres. La modélisation GMM est par exemple définie dans l'article de Douglas A. REYNOLDS, "Speaker identification and vérification using Gaussian mixture speaker models", Speech Communication 17, 1995, p. 91-108.

Lors d'une tentative d'accès à l'application AP, par exemple après une validation du code secret composé précité par le serveur vocal SV, le locuteur L prononce devant le microphone MI un segment vocal contenant le mot de passe MP, soit une occurrence de signal de parole X pendant une durée T, afin que la chaîne des modules V1 à V6 montrée à la figure 3 vérifie que le locuteur est bien celui qui a prononcé le mot de passe pendant la phase d'apprentissage. La durée T est exprimée en nombre de portions de durée prédéterminée de 32 ms environ du segment vocal, appelées trames (frames). Le nombre T est variable en fonction de la vitesse de locution du locuteur.

Les modules d'acquisition A1 et A2 analysent acoustiquement le signal X contenant le mot de passe MP qui vient d'être prononcé, et produisent un signal vocal de test X composé d'une suite de T vecteurs de coefficients cepstraux.

Des modules de similarité V1 et V2 évaluent les similarités entre le signal vocal de test X produit par le module d'analyse acoustique A2 d'une part, et le modèle vocal d'acceptation $\lambda$ et le modèle vocal de refus $\bar{\omega}$ lus en mémoire par le module A3 d'autre part, les paramètres m des modèles $\lambda$ et $\bar{\omega}$ ayant été mis à jour à la fin de la vérification de voix de locuteur précédente, comme on le verra plus loin. Les similarités sont exprimées par des probabilités conditionnelles $P(X|\lambda)$ et $P(X|\bar{\omega})$ respectivement produites par les modules V1 et V2 et caractérisant la vraisemblance que le signal vocal de test observé X soit représentatif du locuteur autorisé ayant prononcé un segment vocal représenté par le modèle d'acceptation $\lambda$ et la vraisemblance que le signal vocal de test observé X soit représentatif de n'importe quel locuteur ayant pu prononcé un segment vocal représenté par le modèle de refus $\bar{\omega}$.

Le module V3 détermine le score de vérification $S_V$ en fonction des probabilités produites, selon la relation suivante :

$$S_V = \frac{1}{T}\left(\log P(X\,/\,\lambda) - \log P(X\,/\,\bar{\omega})\right).$$

Le score est proportionnel au rapport de vraisemblances relatives au modèle d'acceptation $\lambda$ représentatif du locuteur autorisé et au modèle de refus $\bar{\omega}$ représentatif de n'importe quel locuteur. Il exprime la confiance accordée au signal vocal de test observé X. Plus le score $S_V$ est élevé, plus la voix du locuteur à l'origine du signal vocal de test X présente des caractéristiques proches de celles du modèle d'acceptation $\lambda$. T dénote le nombre de trames (frames) contenues dans le segment vocal MP à tester.

Le module V3 détermine également un score de vérification normalisé $S_N$ en fonction du score de vérification de locuteur $S_V$ et de deux paramètres de normalisation $\tilde{\mu}_\lambda$ et $\tilde{\sigma}_\lambda$ du modèle d'acceptation $\lambda$ représentatif de la voix du locuteur autorisé L, selon la relation suivante

$$S_N \;=\; \frac{S_V \;-\; \bar{\mu}_\lambda}{\bar{\sigma}_\lambda}\,.$$

Les deux paramètres $\tilde{\mu}_\lambda$ et $\tilde{\tau}_\lambda$ résultent d'une mise à jour selon les relations de récurrence suivantes, à la fin de la vérification de locuteur ayant précédé celle en cours :

$$\tilde{\mu}_\lambda \equiv (1 - \tau_\mu)\tilde{\mu}_\lambda + \tau_\mu \cdot S_V$$

$$\tilde{\sigma}_\lambda \;\equiv\; \sqrt{(1 - \tau_\sigma)\tilde{\sigma}_\lambda^2 \;+\; \tau_\sigma(S_V \;-\; \tilde{\mu}_\lambda)^2}\,.$$

Le premier paramètre de normalisation $\tilde{\mu}_\lambda$ représente la valeur moyenne statistique, c'est-à-dire l'espérance mathématique du score de vérification de locuteur. La mise à jour du premier paramètre est pondérée par un facteur d'adaptation prédéterminé $\tau_\mu$ inférieur à 1. Le deuxième paramètre de normalisation $\tilde{\sigma}_\lambda$ représente l'écart-type du score de vérification $S_V$ égal à la racine carrée de la différence de la valeur quadratique moyenne du score $S_V$ et du carré de la valeur moyenne statistique $\mu^2$. La mise à jour du deuxième paramètre est pondérée par un autre facteur d'adaptation prédéterminé $\tau_\sigma$ inférieur à 1. Ainsi les paramètres de normalisation $\tilde{\mu}_\lambda$ et $\tilde{\sigma}_\lambda$ sont mis à jour en ligne par estimation de leurs moyennes sur les vérifications de locuteur précédentes.

Les valeurs des paramètres $\tilde{\mu}_\lambda$ et $\tilde{\sigma}_\lambda$ dans les membres droits des deux relations de récurrence précédentes ont été déterminées au cours de la vérification de locuteur précédant celle en cours et sont lues avec les facteurs d'adaptation $\tau_\mu$ et $\tau_\sigma$ par le module V3 avant la détermination du score $S_N$. Lors de la première vérification de locuteur succédant à la phase d'apprentissage, les paramètres initiaux $\tilde{\mu}_{\lambda 0}$ et $\tilde{\sigma}_{\lambda 0}$ sont lus par le module V3 en tant que paramètres $\tilde{\mu}_\lambda$ et $\tilde{\sigma}_\lambda$ servant à la première détermination du score normalisé $S_N$.

La normalisation du score de vérification de locuteur $S_V$ en le score normalisé $S_N$ suit avantageusement les variations du score de vérification, c'est-à-dire de la voix du locuteur, représentées par les paramètres $\tilde{\mu}_\lambda$ et $\tilde{\sigma}_\lambda$. Comme on le verra ci-après, l'évolution de la voix du locuteur autorisé L est reportée dans le score normalisé $S_N$ par une mise à jour des paramètres $\tilde{\mu}_\lambda$ et $\tilde{\sigma}_\lambda$, mais également de paramètres de modèle m ayant servis à la modélisation initiale.

Ensuite le module de décision V4 compare le score normalisé $S_N$ à un premier seuil prédéterminé TH1. Le module V4 autorise l'accès du locuteur à l'application de service AP lorsque le score normalisé $S_N$ est égal ou supérieur au seuil prédéterminé TH1.

Au contraire, si $S_N$<TH1, l'accès à l'application de service AP est refusé au locuteur. Aucune mise à jour de paramètres n'est effectuée puisque le locuteur est considéré comme un imposteur. De préférence, le serveur vocal SV invite le locuteur à prononcer quelques fois encore le mot de passe MP, par exemple trois fois.

La décision d'accès effectuée dans le module V4 dépend du seuil TH1 constant et donc indépendant du locuteur autorisé. Selon l'invention, la décision dépend plutôt du score de vérification normalisé $S_N$ dont les paramètres tels que les facteurs $\tau_\mu$ et $\tau_\sigma$ sont choisis une fois pour toutes en dépendance de l'ergonomie souhaitée pour accéder à l'application AP. Si le type d'application est changé, le seuil TH1 ainsi qu'un deuxième seuil TH2 peuvent être modifiés par le gestionnaire de la nouvelle application dans le serveur SV.

Si l'accès est autorisé, le module de validation V5 compare le seuil normalisé $S_N$ au deuxième seuil TH2 de préférence plus grand que le premier seuil TH1, bien que les seuils puissent être égaux. Le module d'adaptation V6 ne met à jour des paramètres que si le score normalisé est plus grand que le seuil TH2, c'est-à-dire lorsque par exemple la voix du locuteur autorisé a sensiblement changée, notamment à cause du vieillissement ou d'une laryngite du locuteur.

Comme déjà dit, les paramètres de normalisation $\tilde{\mu}_\lambda$ et $\tilde{\sigma}_\lambda$ sont mis à jour selon les deux relations de récurrence ci-dessus, en fonction du score de vérification $S_V$ qui vient d'être déterminé par le module V3 et des valeurs de paramètres $\tilde{\mu}_\lambda$ et $\tilde{\sigma}_\lambda$ qui ont été déterminées lors de la vérification de locuteur précédente.

De préférence, l'un ou les deux facteurs d'adaptation $\tau_\mu$ et $\tau_\sigma$ varient en fonction du nombre d'adaptations, c'est-à-dire du nombre de mises à jour de paramètre de normalisation réalisées dans le module V6 depuis la phase d'apprentissage afin d'adapter rapidement les paramètres de normalisation pour qu'ils convergent rapidement lors de premières adaptations, puis de moins en moins ensuite jusqu'à suspendre l'adaptation. Plus le facteur de vitesse d'adaptation $\tau_\mu$, $\tau_\sigma$ est grand, plus l'adaptation du paramètre $\tilde{\mu}_\lambda$, $\tilde{\sigma}_\lambda$ est rapide.

Le module V6 met également à jour chaque paramètre m au moins du modèle d'acceptation $\lambda$ et éventuellement du modèle de refus $\bar{\omega}$, de manière à diminuer le taux d'imposture représenté par la probabilité $P(X|\bar{\omega})$. La mise à jour de chaque paramètre de modèle m est basée sur une adaptation incrémentable selon la relation de récurrence suivante :

$$m = \frac{N_{AP}m_{AP} + N_{adapt}m_{adapt}}{N_{AP} + N_{adapt}} .$$

$m_{AP}$ et $N_{AP}$ dénotent respectivement la moyenne de la distribution gaussienne, dite également distribution normale, de la densité de probabilité du paramètre de modèle m au cours de la phase d'apprentissage et le nombre de trames dans les segments vocaux, c'est-à-dire dans les mots de passe, ayant servi à estimer les moyennes des distributions gaussiennes relatives aux modèles de Markov cachés $\lambda$ et $\bar{\omega}$. Le paramètre $m_{adapt}$ dénote la moyenne de la distribution gaussienne de la densité de probabilité du paramètre de modèle m qui a été déterminée lors de la mise à jour qui vient d'être réalisée et donc qui reflète l'évolution du paramètre m au cours des mises à jour, après la phase d'apprentissage. $N_{adapt}$ dénote le nombre de trames ayant servi à estimer la moyenne de la distribution gaussienne du paramètre de modèle m pour la mise à jour qui vient d'être réalisée. Le nombre de trames T du signal vocal à tester varie d'une vérification à la suivante en fonction notamment de la vitesse de locution du locuteur.

Après la mise à jour, le module V6 mémorise les nouvelles valeurs des paramètres m des modèles vocaux $\lambda$ et $\bar{\omega}$ et des paramètres de normalisation $\tilde{\mu}_\lambda$ et $\tilde{\sigma}_\lambda$ qui serviront à la détermination des scores $S_V$ et $S_N$ dans le module V3 lors du prochain test de voix de locuteur.

En variante, notamment afin de diminuer la durée de chaque vérification de locuteur, seulement l'un des paramètres de normalisation $\tilde{\mu}_\lambda$ et $\tilde{\sigma}_\lambda$ est mis à jour, de préférence seulement le paramètre de valeur moyenne statistique $\tilde{\mu}_\lambda$ ce qui s'impose en attribuant la valeur nulle au facteur d'adaptation $\tau_\sigma$. De même, au moins l'un ou quelques-uns des paramètres de modèle m sont seulement mis à jour, ce qui s'impose en attribuant la valeur nulle aux nombres de trames $N_{adapt}$ pour les autres paramètres de modèle qui ne sont pas à mettre à jour.

## Revendications

1. Dispositif pour reconnaître automatiquement la voix d'un locuteur autorisé à accéder à une application (AP), comprenant un moyen (A1, A2, A3) pour générer des paramètres (m) d'un modèle vocal d'acceptation ($\lambda$) relatif à un segment vocal (MP) prononcé par le locuteur autorisé et des paramètres (m) d'un modèle vocal de refus ($\bar{\omega}$) préalablement pendant une phase d'apprentissage, un moyen (V1, V2, V3) pour normaliser par des paramètres de normalisation un score de vérification de locuteur dépendant du rapport de vraisemblances entre un segment vocal à tester (X) et les modèles d'acceptation et de refus, et un moyen (V4) pour comparer le score de vérification normalisé ($S_N$) à un premier seuil (TH1) afin de n'autoriser l'accès du locuteur ayant prononcé le segment vocal à tester à l'application (AP) que si le score normalisé est au moins aussi grand que le premier seuil, **caractérisé en ce qu'**il comprend un moyen (V6) pour mettre à jour au moins l'un ($\tilde{\mu}_\lambda$) des paramètres de normalisation en fonction d'une valeur précédente dudit paramètre et du score de vérification de locuteur ($S_V$) à chaque test de segment vocal seulement lorsque le score normalisé ($S_N$) est au moins égal à un deuxième seuil (TH2) qui est au moins égal au premier seuil (TH1).

2. Dispositif conforme à la revendication 1, dans lequel l'un des paramètres mis à jour est représentatif de la valeur moyenne statistique ($\tilde{\mu}_\lambda$) du score de vérification de locuteur ($S_V$).

3. Dispositif conforme à la revendication 2, dans lequel la valeur moyenne statistique ($\tilde{\mu}_\lambda$) du score de vérification $S_V$ est mise à jour selon la relation suivante :

$$\tilde{\mu}_\lambda \equiv (1 - \tau_\mu)\tilde{\mu}_\lambda + \tau_\mu \cdot S_V$$

dans laquelle $\tau_\mu$ est un facteur d'adaptation prédéterminé.

4. Dispositif conforme à la revendication 3, dans lequel le facteur d'adaptation prédéterminé $\tau_\mu$ varie en fonction du nombre de mises à jour de paramètre de normalisation.

5. Dispositif conforme à l'une quelconque des revendications 1 à 4, dans lequel un des paramètres mis à jour est représentatif de l'écart-type ($\tilde{\sigma}_\lambda$) du score de vérification de locuteur ($S_V$).

6. Dispositif conforme à la revendication 5, dans lequel l'écart-type $\tilde{\sigma}_\lambda$ du score de vérification $S_V$ est mise à jour selon la relation suivante :

$$\tilde{\sigma}_\lambda \equiv \sqrt{(1 - \tau_\sigma)\tilde{\sigma}_\lambda^2 + \tau_\sigma(S_V - \tilde{\mu}_\lambda)^2}$$

dans laquelle $\tau_\sigma$ est un facteur d'adaptation prédéterminé.

7. Dispositif conforme à la revendication 6, dans lequel le facteur d'adaptation prédéterminé $\tau_\sigma$ varie en fonction du nombre de mises à jour de paramètre de normalisation.

8. Dispositif conforme à l'une quelconque des revendications 1 à 7, comprenant un moyen (V6) pour mettre à jour au moins l'un des paramètres (m) du modèle d'acceptation (λ) en fonction d'une valeur précédente dudit paramètre de modèle seulement lorsque le score normalisé (S$_N$) est au moins égal au deuxième seuil (TH2).

9. Dispositif conforme à la revendication 8, dans lequel le paramètre de modèle m est mis à jour selon la relation suivante :

$$m = \frac{N_{AP}m_{AP} + N_{adapt}m_{adapt}}{N_{AP} + N_{adapt}}$$

dans laquelle m$_{AP}$ et N$_{AP}$ dénotent respectivement la moyenne de la distribution gaussienne de la densité de probabilité du paramètre de modèle (m) au cours de la phase d'apprentissage et le nombre de trames dans les segments vocaux ayant servi à estimer des moyennes de distributions gaussiennes relatives aux modèles d'acceptation (λ) et de refus ($\bar{\omega}$), m$_{adapt}$ dénote la moyenne de la distribution gaussienne de la densité de probabilité du paramètre de modèle (m) déterminée lors de la mise à jour qui vient d'être réalisée, et N$_{adapt}$ dénote le nombre de trames ayant servi à estimer la moyenne de la distribution gaussienne du paramètre de modèle (m) pour la mise à jour qui vient d'être réalisée.

10. Dispositif conforme à l'une quelconque des revendications 1 à 9, dans lequel le score normalisé S$_N$ est déterminé en fonction du score de vérification de locuteur S$_V$ et de deux paramètres de normalisation mis à jour $\tilde{\mu}_\lambda$ et $\tilde{\sigma}_\lambda$, selon la relation suivante :

$$S_N = \frac{S_V - \bar{\mu}_\lambda}{\tilde{\sigma}_\lambda},$$

les paramètres $\tilde{\mu}_\lambda$ et $\tilde{\sigma}_\lambda$ étant respectivement la valeur moyenne statistique et l'écart-type du score de vérification de locuteur.

**Patentansprüche**

1. Vorrichtung zur automatischen Erkennung der Stimme eines Sprechers, der berechtigt ist, auf eine Anwendung (AP) zuzugreifen, bestehend aus einem Mittel (A1, A2, A3) zur Erzeugung von Parametern (m) für ein Annahme-Stimmmodell (λ) in Bezug auf ein Sprachsegment (MP), das von dem berechtigten Sprecher vorab während einer Selbstlernphase ausgesprochen wurde, und von Parametern (m) für ein Ablehnungs-Stimmmodell (ω), einem Mittel (V1, V2, V3) zur Standardisierung des Sprecher-Prüfergebnisses anhand von Standardisierungsparametern, die von dem Ähnlichkeitsverhältnis zwischen dem zu testenden Sprachsegment (X) und den Annahme- oder Ablehnungsstimmmodellen abhängig sind, und einem Mittel (V4) zum Vergleich des standardisierten Prüfergebnisses (S$_N$) mit einem ersten Grenzwert (TH1), um den Zugriff durch den Sprecher, der das zu prüfende Sprachsegment für die Anwendung (AP) ausgesprochen hat, nur freizugeben, wenn das standardisierte Ergebnis mindestens so groß ist wie der erste Grenzwert, **dadurch gekennzeichnet, dass** sie ein Mittel (V6) umfasst, um mindestens einen (μλ) der Standardisierungsparameter in Abhängigkeit von dem vorgehenden Wert des genannten Parameters und dem Sprecher-Prüfergebnis (S$_V$) bei jedem Sprachsegmenttest nur dann zu aktualisieren, wenn das standardisierte Ergebnis (S$_N$) mindestens gleich einem zweiten Grenzwert (TH2) ist, der mindestens gleich dem ersten Grenzwert (TH1) ist.

2. Vorrichtung gemäß Anspruch 1, in der einer der aktualisierten Parameter repräsentativ für den statistischen Mittelwert (μλ) des Sprecher-Prüfergebnisses (S$_V$) ist.

3. Vorrichtung gemäß Anspruch 2, in der der statistische Mittelwert (μλ) des Prüfergebnisses S$_V$ entsprechend der folgenden Gleichung aktualisiert wird:

$$(\mu\lambda) = (1 - \tau_\mu)\mu_\lambda + \tau_\mu \cdot S_v$$

wobei $\tau_\mu$ ein vordefinierte Anpassungsfaktor ist.

**4.** Vorrichtung gemäß Anspruch 3, in der der vordefinierte Anpassungsfaktor $\tau_\mu$ in Abhängigkeit von der Anzahl an Aktualisierungen des Standardisierungsparameters variiert.

**5.** Vorrichtung gemäß einem der Ansprüche 1 bis 4, in der einer der aktualisierten Parameter repräsentativ für die Standardabweichung ($\sigma\lambda$) des Sprecher-Prüfergebnisses ($S_V$) ist.

**6.** Vorrichtung gemäß Anspruch 5, in der die Standardabweichung ($\sigma\lambda$) des Prüfergebnisses $S_V$ entsprechend der folgenden Gleichung aktualisiert wird:

$$\bar{\sigma}_\lambda \equiv \sqrt{(1 - \tau_\sigma)\tilde{\sigma}_\lambda^2 + \tau_\sigma(S_V - \tilde{\mu}_\lambda)^2}$$

wobei $\tau_\sigma$ ein vordefinierter Anpassungsfaktor ist.

**7.** Vorrichtung gemäß Anspruch 6, in der der vordefinierte Anpassungsfaktor $\tau_\sigma$ in Abhängigkeit von der Anzahl an Aktualisierungen des Standardisierungsparameters variiert.

**8.** Vorrichtung gemäß einem der Ansprüche 1 bis 7, bestehend aus einem Mittel (V6) zur Aktualisierung von mindestens einem der Parameter (m) des Annahmemodells ($\lambda$) in Abhängigkeit von einem vorhergehenden Wert des genannten Modellparameters, jedoch nur wenn das standardisierte Ergebnis ($S_N$) mindestens gleich einem zweiten Grenzwert (TH2) ist.

**9.** Vorrichtung gemäß Anspruch 8, in der der Modellparameter m entsprechend der folgenden Gleichung aktualisiert wird:

$$m = \frac{N_{AP}m_{AP} + N_{adapt}m_{adapt}}{N_{AP} + N_{adapt}}$$

wobei $m_{AP}$ und $N_{AP}$ für den Mittelwert der Gaußschen Verteilung der Wahrscheinlichkeitsdichte des Modellparameters (m) im Verlauf der Selbstlernphase, bzw. für die Anzahl an Rastern in den Sprachsegmenten stehen, die zur Schätzung der Mittelwerte der Gaußschen Verteilung in Bezug auf die Annahme- ($\lambda$) und Ablehnungsmodelle ($\omega$) herangezogen wurden; $m_{adapt}$ bezeichnet den Mittelwert der Gaußschen Verteilung der Wahrscheinlichkeitsdichte des Modellparameters (m), der bei der soeben erfolgten Aktualisierung ermittelt wurde, und $N_{adapt}$ bezeichnet die Anzahl an Rastern, die zur Schätzung des Mittelwerts der Gaußschen Verteilung des Modellparameters (m) für die soeben durchgeführte Aktualisierung herangezogen wurden.

**10.** Vorrichtung gemäß einem der Ansprüche 1 bis 9, in der das standardisierte Ergebnis $S_N$ in Abhängigkeit von dem Sprecher-Prüfergebnis $S_V$ und zwei aktualisierten Standardisierungsparametern $\mu\lambda$ und $\sigma\lambda$ anhand der folgenden Gleichung ermittelt wird:

$$S_N = \frac{S_V - \tilde{\mu}_\lambda}{\tilde{\sigma}_\lambda}$$

wobei die Parameter $\mu\lambda$ und $\sigma\lambda$ für den statistischen Mittelwert, bzw. für die Standardabweichung des Sprecher-Prüfergebnisses stehen.

**Claims**

**1.** A device for automatically recognizing the voice of a speaker authorized to access an application (AP), comprising means (A1, A2, A3) for generating beforehand, during a learning phase, parameters (m) of an acceptance voice model ($\lambda$) relative to a voice segment (MP) spoken by the authorized speaker and parameters (m) of a rejection

voice model ($\bar{\omega}$), means (V1, V2, V3) for normalizing by means of normalization parameters a speaker verification score depending on the likelihood ratio between a voice segment to be tested (X) and the acceptance and rejection models, and means (V4) for comparing the normalized verification score ($S_N$) to a first threshold (TH1) in order to authorize access to the application (AP) by the speaker who spoke the voice segment to be tested only if the normalized verification score is at least as high as the first threshold, **characterized in that** it includes means (V6) for updating at least one ($\tilde{\mu}_\lambda$) of the normalization parameters as a function of a preceding value of said parameter and the speaker verification score ($S_V$) on each voice segment test only if the normalized score ($S_N$) is at least equal to a second threshold (TH2) that is at least equal to the first threshold (TH1).

2. A device according to claim 1, wherein one of the updated parameters is representative of a statistical mean value ($\tilde{\mu}_\lambda$) of the speaker verification score ($S_V$).

3. A device according to claim 2, wherein the statistical mean value ($\tilde{\mu}_\lambda$) of the verification score $S_V$ is updated in accordance with the following relationship:

$$\tilde{\mu}_\lambda \equiv (1 - \tau_\mu)\,\tilde{\mu}_\lambda + \tau_\mu . S_V$$

in which $\tau_\mu$ is a predetermined adaptation factor.

4. A device according to claim 3, wherein the predetermined adaptation factor $\tau_\mu$ varies as a function of the number of normalization parameter updates.

5. A device according to any one of claims 1 to 4, wherein one of the updated parameters is representative of the standard deviation ($\tilde{\sigma}_\lambda$) of the speaker verification score ($S_V$).

6. A device according to claim 5, wherein the standard deviation $\tilde{\sigma}_\lambda$ of the speaker verification score $S_V$ is updated in accordance with the following relationship:

$$\tilde{\sigma}_\lambda \equiv \sqrt{(1 - \tau_\sigma)\tilde{\sigma}_\lambda^2 + \tau_\sigma(S_V - \tilde{\mu}_\lambda)^2}$$

in which $\tau_\sigma$ is a predetermined adaptation factor.

7. A device according to claim 6, wherein the predetermined adaptation factor $\tau_\sigma$ varies as a function of the number of normalization parameter updates.

8. A device according to any one of claims 1 to 7, comprising means (V6) for updating at least one of the parameters (m) of the acceptance voice model ($\lambda$) as a function of a preceding value of said model parameter only if the normalized verification score ($S_N$) is at least equal to the second threshold (TH2).

9. A device according to claim 8, wherein the model parameter m is updated in accordance with the following equation:

$$m = \frac{N_{AP}m_{AP} + N_{adapt}m_{adapt}}{N_{AP} + N_{adapt}}$$

in which $m_{AP}$ and $N_{AP}$ respectively denote the mean value of Gaussian distribution of probability density of the model parameter (m) during the learning phase and the number of frames in voice segments used to estimate mean values of Gaussian distributions relative to the acceptance model ($\lambda$) and rejection model ($\bar{\omega}$), $m_{adapt}$ denotes a mean value of Gaussian distribution of probability density of the model parameter (m) determined during the update that has just been effected, and $N_{adapt}$ denotes the number of frames used to estimate a mean value of the Gaussian distribution of the model parameter (m) for the update that has just been effected.

10. A device according to any one of claims 1 to 9, wherein the normalized verification score $S_N$ is determined as a function of the speaker verification score $S_V$ and two updated normalization parameters $\tilde{\mu}_\lambda$ and $\tilde{\sigma}_\lambda$, in accordance with the following equation:

$$S_N = \frac{S_V - \tilde{\mu}_\lambda}{\tilde{\sigma}_\lambda},$$

the parameters $\tilde{\mu}_\lambda$ and $\tilde{\sigma}_\lambda$ being respectively the statistical mean value and the standard deviation of the speaker verification score.

$$S_N = \frac{S_V - \tilde{\mu}_\lambda}{\tilde{\sigma}_\lambda},$$

## FIG. 1

L

MI    MP

TE

TERMINAL

RA

RESEAU
D'ACCES

SV

SERVEUR VOCAL

DR

Dispositif de reconnaissance vocale de
locuteur (FIGS. 2, 3)

AP

Application

RP

RESEAU
DE PAQUETS

SAP

SERVEUR D'APPLICATION

## FIG. 2

MI

L

MP

A1

ACQUISITION
DE PAROLE

A2

ANALYSE
ACOUSTIQUE

A3

GENERATION
DE MODELE
DU LOCUTEUR

$\lambda, \varpi$

APPRENTISSAGE

$\tau_\mu, \tau_\sigma$
$\tilde{\mu}_{\lambda 0}, \tilde{\tau}_{\lambda 0}$

FIG. 3

MI

A1  ACQUISITION

A2  ANALYSE ACOUSTIQUE

A3  GENERATION DE MODELE DU LOCUTEUR

X

$\lambda$     $\varpi$

V1  SIMILARITE AVEC MODELE D'ACCEPTATION

V2  SIMILARITE AVEC MODELE DE REFUS

V3  SCORE DE VERIFICATION

$$S_V = \frac{1}{T}(\log P(X \mid \lambda) - \log P(X \mid \varpi))$$

Lecture   $\widetilde{\mu}_\lambda, \widetilde{\tau}_\lambda$

$$S_N = \frac{S_V - \widetilde{\mu}_\lambda}{\widetilde{\sigma}_\lambda}$$

Accès refusé

DECISION
$S_N \geq TH1$ ?   V4

AP  APPLICATION

Accès autorisé

V5  VALIDATION
$S_N \geq TH2 \geq TH1$ ?   non

oui

V6  MISE A JOUR DES PARAMETRES DU MODELE ACOUSTIQUE

$$m = \frac{N_{AP} m_{AP} + N_{adapt} m_{adapt}}{N_{AP} + N_{adapt}}$$

MISE A JOUR DES PARAMETRES DE NORMALISATION

$$\widetilde{\mu}_\lambda \equiv (1 - \tau_\mu)\widetilde{\mu}_\lambda + \tau_\mu . S_V$$

$$\widetilde{\sigma}_\lambda \equiv \sqrt{(1 - \tau_\sigma)\widetilde{\sigma}_\lambda^2 + \tau_\sigma (S_V - \mu_\lambda)^2}$$

Mémoriser m, $\widetilde{\mu}_\lambda, \widetilde{\sigma}_\lambda$

PROCHAIN TEST DE VOIX DE LOCUTEUR